(19) Europäisches Patentamt
European Patent Office
Office européen des brevets

(11) Veröffentlichungsnummer: **0 002 475**
**B1**

(12) **EUROPÄISCHE PATENTSCHRIFT**

(45) Veröffentlichungstag der Patentschrift: **12.08.81**

(51) Int. Cl.³: **C 08 G 69/48,** D 21 H 3/58

(21) Anmeldenummer: **78101532.6**

(22) Anmeldetag: **04.12.78**

(54) **Amidgruppenhaltige Polyamine, ihre Herstellung, ihre Verwendung bei der Papierherstellung und Hilfsmittel, die diese Polyamine enthalten.**

(30) Priorität: **17.12.77 DE 2756469**

(43) Veröffentlichungstag der Anmeldung: **27.06.79 Patentblatt 79/13**

(45) Bekanntmachung des Hinweises auf die Patenterteilung: **12.08.81 Patentblatt 81/32**

(84) Benannte Vertragsstaaten: **BE CH DE FR GB IT NL SE**

(56) Entgegenhaltungen:
**DE-A-1 906 561**
**FR-A-1 510 556**
**FR-A-2 013 072**
**FR-A-2 249 104**
**ABSTRACTS BULLETIN OF THE INSTITUTE OF PAPER CHEMISTRY, Vol. 47, Nr. 11, 05—1977, Seite 1256, Nr. 12282u**

(73) Patentinhaber: **BAYER AG, Zentralbereich Patente, Marken und Lizenzen, D-5090 Leverkusen 1, Bayerwerk (DE)**

(72) Erfinder: **Lehmann, Wolfgang, Dr., Carl-Rumpff-Strasse 7, D-5090 Leverkusen (DE)**
Erfinder: **Müller, Friedhelm, Dr., Zum Hahnenberg 62, D-5068 Odenthal (DE)**
Erfinder: **Löbach, Wilfried, Flutgraben 17, D-5300 Bonn 3 (DE)**
Erfinder: **Cramm, Günther, Dr., Jakob-Boehme-Strasse 11, D-5000 Köln 80 (DE)**
Erfinder: **Hammerström, Knut, Dr., Dattenfelder-Strasse 38, D-5000 Köln 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 002 475 B1

BUNDESDRUCKEREI BERLIN

# Amidgruppenhaltige Polyamine, ihre Herstellung, ihre Verwendung bei der Papierherstellung und Hilfsmittel, die diese Polyamine enthalten

Die Erfindung betrifft wasserlösliche, nicht selbstvernetzende Polyamine, die durch Umsetzung von

A) einem oder mehreren in Wasser löslichen oder dispergierbaren amidgruppenhaltigen Aminen, hergestellt durch Kondensation von
   a) 1 Mol Dicarbonsäure bzw. deren funktionellen Derivaten,
   b) 0 bis 30 Mol mindestens drei C-Atome enthaltenden Aminocarbonsäuren oder deren Lactamen und
   c) Polyalkylenpolyaminen der allgemeinen Formel

$$H_2N - \left[ CH_2 - \underset{\displaystyle R}{\underset{|}{CH}} - ( - CH_2 - )_y - NH \right]_x - H$$

   in der

   R H oder $CH_3$
   y gleich oder verschieden die Zahl 0 oder 1 und
   x eine Zahl von 4 bis 15 bedeuten,

   oder Mischungen dieser Polyalkylenpolyamine mit Aminen der gleichen allgemeinen Formel, in der aber

   x eine Zahl von 1 bis 3 bedeutet,

   wobei ggfs. ein Teil der zum Einsatz gelangenden Polyalkylenpolyamine c, durch andersartige Di-, Tri-, Tetra-, Penta- oder Hexamine ersetzt wird, und

B) gegenüber Aminogruppen polyfunktionellen Verbindungen in Mengen von 0,1—0,5, insbes. 0,15—0,3 Mol je Mol Basenstickstoff des mehrvertigen Amins A, mit der Maßgabe, daß bei Abwesenheit von b das Molverhältnis von a : c = 1 : 1,4 bis 3 beträgt und bei Mitverwendung von b 3 bis 30 Mol c eingesetzt werden.

Die Erfindung betrifft ferner ein Verfahren zur Herstellung dieser wasserlöslichen Polyamine und ihre Verwendung als Mittel zur Erhöhung der Retention von Fasern, Füllstoffen und Pigmenten sowie zur Beschleunigung der Entwässerung bei der Papierherstellung und zur Aufarbeitung von Papiermaschinenabwässern durch Filtration, Sedimentation und Flotation.

Als Dicarbonsäuren a, die den amidgruppenhaltigen mehrwertigen Aminen A zugrunde liegen, kommen insbesondere die gesättigten aliphatischen Dicarbonsäuren, wie Bernsteinsäure, Glutarsäure, Adipinsäure, Sebazinsäure oder Dodecandisäure oder deren funktionelle Derivate in Betracht. Außerdem aber auch ungesättigte aliphatische Dicarbonsäuren, wie Maleinsäure oder Fumarsäure, aliphatische Ätherdicarbonsäuren, wie z. B. Diglykolsäure und aromatische Dicarbonsäuren, wie Isophthalsäure oder Terephthalsäure oder deren funktionelle Derivate sowie aber auch Gemische dieser Dicarbonsäuren.

Als Aminocarbonsäuren oder deren Lactame b, die den amidgruppenhaltigen Aminen A zugrunde liegen, seien beispielsweise genannt: 3-Amino-3,3-dimethyl-propionsäure, 4-Amino-butansäure, 6-Aminohexansäure, 8-Amino-octansäure, 11-Aminoundecansäure und 12-Aminododecansäure bzw. 3,3-Dimethyl-azitidinon-(2), Pyrrolidon-(2), 6-Caprolactam, 8-Capryllactam, 11-Undecanlactam und 12-Dodecanlactam.

Als Polyalkylenpolyamine c, die den amidgruppenhaltigen Aminen A zugrunde liegen, seien vor allem die Polyäthylenpolyamine genannt, wie z. B. Äthylendiamin, Propylendiamin-1,2, Diäthylentriamin, Dipropylentriamin, Triäthylentetramin, Tripropylentetramin, Tetraäthylenpentamin, Tetrapropylenpentamin, Pentaäthylenhexamin, Pentapropylenhexamin, Hexaäthylenhaptamin, Hexapropylenheptamin, Heptaäthylenoktamin, Heptapropylenoktamin und ihre Gemische sowie Polyäthylenpolyamine, Pentaäthylenpentamin, Oktaäthylenheptamin und deren Gemische, insbesondere aber

1.) das bei der diskontinuierlichen, (z. B. Houben-Weyl, 4. Auflage, XI/1, Seite 44), oder bei der kontinuierlichen (z. B. im GB-PS 1 147 984, US-PS 1 832 534 und 2 049 467) Umsetzung von 1.2-Dichloräthan mit wäßrigem Ammoniak, gegebenenfalls in Gegenwart von zugesetzten Äthylendiamin oder Diäthylentriamin (US-PS 2 769 841 und DE-OS 1 668 922) erhaltene Polyäthylenpolyamingemisch, das erhebliche Anteile an Tetraäthylenpentamin, Pentaäthylenhexamin, Hexaäthylenhexamin, Hexaäthylenheptamin, Heptaäthylenheptamin und höhere Amine enthält, und vor allem

# Amidgruppenhaltige Polyamine, ihre Herstellung, ihre Verwendung bei der Papierherstellung und Hilfsmittel, die diese Polyamine enthalten

Die Erfindung betrifft wasserlösliche, nicht selbstvernetzende Polyamine, die durch Umsetzung von

A) einem oder mehreren in Wasser löslichen oder dispergierbaren amidgruppenhaltigen Aminen, hergestellt durch Kondensation von
   a) 1 Mol Dicarbonsäure bzw. deren funktionellen Derivaten,
   b) 0 bis 30 Mol mindestens drei C-Atome enthaltenden Aminocarbonsäuren oder deren Lactamen und
   c) Polyalkylenpolyaminen der allgemeinen Formel

$$H_2N\left[-CH_2-\underset{R}{\underset{|}{CH}}-(-CH_2-)_y-NH-\right]_x H$$

in der

R H oder $CH_3$
y gleich oder verschieden die Zahl 0 oder 1 und
x eine Zahl von 4 bis 15 bedeuten,

oder Mischungen dieser Polyalkylenpolyamine mit Aminen der gleichen allgemeinen Formel, in der aber

x eine Zahl von 1 bis 3 bedeutet,

wobei ggfs. ein Teil der zum Einsatz gelangenden Polyalkylenpolyamine c, durch andersartige Di-, Tri-, Tetra-, Penta- oder Hexamine ersetzt wird, und

B) gegenüber Aminogruppen polyfunktionellen Verbindungen in Mengen von 0,1—0,5, insbes. 0,15—0,3 Mol je Mol Basenstickstoff des mehrvertigen Amins A, mit der Maßgabe, daß bei Abwesenheit von b das Molverhältnis von a : c = 1 : 1,4 bis 3 beträgt und bei Mitverwendung von b 3 bis 30 Mol c eingesetzt werden.

Die Erfindung betrifft ferner ein Verfahren zur Herstellung dieser wasserlöslichen Polyamine und ihre Verwendung als Mittel zur Erhöhung der Retention von Fasern, Füllstoffen und Pigmenten sowie zur Beschleunigung der Entwässerung bei der Papierherstellung und zur Aufarbeitung von Papiermaschinenabwässern durch Filtration, Sedimentation und Flotation.

Als Dicarbonsäuren a, die den amidgruppenhaltigen mehrwertigen Aminen A zugrunde liegen, kommen insbesondere die gesättigten aliphatischen Dicarbonsäuren, wie Bernsteinsäure, Glutarsäure, Adipinsäure, Sebazinsäure oder Dodecandisäure oder deren funktionelle Derivate in Betracht. Außerdem aber auch ungesättigte aliphatische Dicarbonsäuren, wie Maleinsäure oder Fumarsäure, aliphatische Ätherdicarbonsäuren, wie z. B. Diglykolsäure und aromatische Dicarbonsäuren, wie Isophthalsäure oder Terephthalsäure oder deren funktionelle Derivate sowie aber auch Gemische dieser Dicarbonsäuren.

Als Aminocarbonsäuren oder deren Lactame b, die den amidgruppenhaltigen Aminen A zugrunde liegen, seien beispielsweise genannt: 3-Amino-3,3-dimethyl-propionsäure, 4-Amino-butansäure, 6-Aminohexansäure, 8-Amino-octansäure, 11-Aminoundecansäure und 12-Aminododecansäure bzw. 3,3-Dimethyl-azitidinon-(2), Pyrrolidon-(2), 6-Caprolactam, 8-Capryllactam, 11-Undecanlactam und 12-Dodecanlactam.

Als Polyalkylenpolyamine c, die den amidgruppenhaltigen Aminen A zugrunde liegen, seien vor allem die Polyäthylenpolyamine genannt, wie z. B. Äthylendiamin, Propylendiamin-1,2, Diäthylentriamin, Dipropylentriamin, Triäthylentetramin, Tripropylentetramin, Tetraäthylenpentamin, Tetrapropylenpentamin, Pentaäthylenhexamin, Pentapropylenhexamin, Hexaäthylenhaptamin, Hexapropylenheptamin, Heptaäthylenoktamin, Heptapropylenoktamin und ihre Gemische sowie Polyäthylenpolyamine, Pentaäthylenpentamin, Oktaäthylenheptamin und deren Gemische, insbesondere aber

1.) das bei der diskontinuierlichen, (z. B. Houben-Weyl, 4. Auflage, XI/1, Seite 44), oder bei der kontinuierlichen (z. B. im GB-PS 1 147 984, US-PS 1 832 534 und 2 049 467) Umsetzung von 1.2-Dichloräthan mit wäßrigem Ammoniak, gegebenenfalls in Gegenwart von zugesetzten Äthylendiamin oder Diäthylentriamin (US-PS 2 769 841 und DE-OS 1 668 922) erhaltene Polyäthylenpolyamingemisch, das erhebliche Anteile an Tetraäthylenpentamin, Pentaäthylenhexamin, Hexaäthylenhexamin, Hexaäthylenheptamin, Heptaäthylenheptamin und höhere Amine enthält, und vor allem

2.) das nach Abdestillieren von Äthylendiamin, evtl. auch noch von Diäthylentriamin und Triäthylentetramin aus dem gemäß 1.) hergestellten Rohgemisch verbleibende Polyäthylenpolyamingemisch.

3.) die durch Polymerisation von 1,2-Alkyleniminen erhältlichen oligomeren Polyäthylenpolyamine.

Als weitere Polyalkylenpolyamine o. g. Formel seien noch genannt

4.) Reine Polypropylenpolyamine und deren Gemische und

5.) gemischte Polyäthylenpolypropylenpolyamine und deren Gemische, vor allem die durch ein- bzw. mehrmalige Umsetzung von Äthylendiamin bzw. Propylendiamin-1,3 mit Acrylnitril und jeweils nachfolgender Hydrierung erhalten sind, z. B. die mehrwertigen Amine der Formel

$$H_2N-[CH_2-CH_2-CH_2-NH]_x-H$$

wobei x eine ganze Zahl von 4 bis 10 bedeutet
sowie diejenigen der Formel

$$H-[NH-CH_2-CH_2-CH_2]_m-NH-CH_2-CH_2-NH-[CH_2-CH_2-CH_2-NH]_nH$$

wobei m eine ganze Zahl von 1 bis 5 und n eine ganze Zahl von 0 bis 5 bedeutet.

In manchen Fällen ist es von Vorteil, wenn ein Teil der zum Einsatz gelangenden Polyalkylenpolyamine c durch andersartige Di-, Tri-, Tetra-, Penta- oder Hexamine ersetzt wird, z. B. durch Amine der Formel

$$Y-[(CH_2-CHR_3-CH_2-NH)_x-H]_z$$

in der

Y für Sauerstoff, Schwefel oder den Rest einer mindestens zweiwertigen aliphatischen, cycloaliphatischen, araliphatischen oder aromatischen Hydroxyl- und/oder Sulfhydrylgruppen aufweisenden Verbindung steht,
$R_3$ Wasserstoff oder die Methylgruppe bedeutet,
x eine ganze Zahl von mindestens 1, vorzugsweise 1—3, ist und
z für eine ganze Zahl von mindestens 2, vorzugsweise 2—4, steht.

Vertreter dieser Polyamine sind beispielsweise Bis-[3-amino-propyl]-äther, Bis-[3-aminopropyl]-sulfid, Äthylenglykol-bis-[3-amino-propyläther], Dithioäthylenglykol-bis-[3-aminopropyläther], Neopentylen-glykol-bis-[3-amino-propyl-äther], Hexahydro-p-xylylen-glykol-bis-[3-amino-propyläther] und Hydrochinon-bis-[3-amino-propyläther];
sowie Amine der Formel

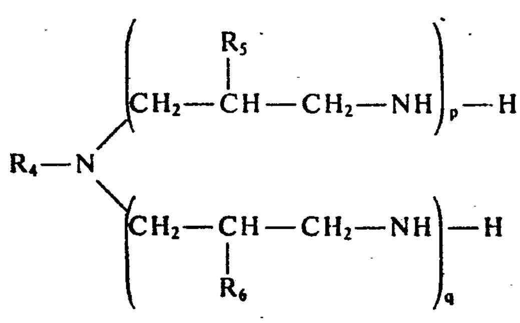

in der

$R_4$ für einen gegenenfalls durch eine Amino- oder Hydroxygruppe substituierten $C_1-C_{18}$-Alkylrest und
$R_5$ und $R_6$ unabhängig voneinander für Wasserstoff oder eine Methylgruppe stehen und
$p+q$ eine Zahl von 1 bis 20, vorzugsweise 2 bis 5, ist.

Vertreter dieser Polyamine sind beispielsweise Äthyl-bis-(3-amino-propyl)-amin, 2-Hydroxyäthyl-bis-(3-amino-propyl)-amin, n-Butyl-bis-(3-amino-propyl)-amin, Tris-(3-amino-propyl)-amin und vor allem Methyl-bis-(3-amino-propyl)-amin.

Die Herstellung der mehrwertigen Amine A aus den Komponenten a, b und c kann in der Weise erfolgen, daß man die Komponenten unter Ausschluß von Sauerstoff mehrere Stunden auf Temperaturen von 150 bis 250°C unter gewöhnlichem Druck erhitzt, wobei das bei der Bildung der Amidgruppen frei werdende Wasser abdestilliert. Zwecks Vermeidung einer Dunkelfärbung der

amidgruppenhaltigen Amine kann in manchen Fällen der Zusatz von geringen Mengen an Hydrazinhydrat oder Hydraziden von Vorteil sein.

Von den bekannten angeführten »Polyamidaminen« bzw. »Polyamidoaminen« bzw. »Polyamidpolyaminen« bzw. »Polyamidpolyamiden, die beispielsweise als Ausgangsverbindungen für die Umsetzung mit polyfunktionellen Verbindungen in den deutschen Patentschriften 1 177 824 und 1 771 814 beschrieben sind, unterscheiden sich die zur Herstellung der erfindungsgemäßen Polyamine verwendbaren »amidgruppenhaltigen mehrwertigen Amine A« dadurch, daß sie aus den Komponenten a), b) und c) in einem davon abweichenden Molverhältnis gebildet sind. Während die bekannten Produkte im Verhältnis a : c = 1 : 0,8 bis 1,4, vorzugsweise 1 : 1 bis 1,1, hergestellt werden, werden die neuen Verbindungen im Verhältnis 1 : 1,4 bis 3,0, vorzugsweise 1 : 1,75 bis 2,5, bzw. bei Mitverwendung von b) im Molverhältnis 3 bis 30 hergestellt. Dieser größere Aminüberschuß verhindert die Bildung höherer mittlerer Molekulargewichte, was sich auch in einer geringeren Viskosität der wasserfreien mehrwertigen Amine gegenüber den »Polyamidaminen« äußert. Während die »Polyamidamine« bei 150°C eine Viskosität von 500 bis 50 000 m Pas, vor allem von 1 000 bis 30 000 m Pas aufweisen, haben die mehrwertigen Amine, die dieser Erfindung zugrunde liegen, eine Viskosität, die kleiner als 500 m Pas, insbesondere geringer als 250, vor allem aber kleiner als 150 m Pas bei 150°C ist.

In Frage kommen auch modifizierte amidgruppenhaltige Polyamine der o. g. Typen, insbesondere solche, bei denen ein Teil der sekundären Aminogruppen durch Kondensation oder Addition in tertiäre Aminogruppen überführt worden ist, z. B. durch Reaktion mit $\alpha,\beta$-ungesättigten Säuren im wäßrigen Milieu, wie Vinylsulfonsäure, Acryl- oder Methacrylsäure, Malein- und Itaconsäure mit $\alpha,\beta$-ungesättigten Säureamiden, wie Acrylsäure- oder Methacrylsäureamid, 1- oder 2-Halogenfettsäuren, wie Chloressigsäure und 2-Propionsäure.

Als gegenüber Aminogruppen polyfunktionelle Verbindungen B) eignen sich zur Herstellung der erfindungsgemäßen Polyamine insbesondere solche polyfunktionellen Verbindungen, die in wäßriger Lösung bei pH-Werten über 6, vorzugsweise über 8, mit den in den basischen Polyamiden enthaltenen Aminogruppen vollständig zu reagieren vermögen.

Als gegenüber Aminogruppen polyfunktionellen Verbindungen seien beispielsweise genannt:
bifunktionelle Verbindungen, vor allem $\alpha,\omega$-Alkyldihalogenide, z. B. insbesondere 1,2-Dichloräthan, 1,2-Dibromäthan, 1,2-Dichlorpropan, 1,3-Dichlorpropan, 1,6-Dichlorhexan;
$\omega,\omega'$-Dihalogenäther, z. B. 2,2'-Dichlor-diäthyläther, Bis-($\beta$-chlor-isopropyl)-äther, Bis-(4-chlor-butyl-äther);
Halogenhydrine bzw. Epihalogenhydrine, z. B. Epichlorhydrin, 1,3-Dichlorpropanol-(2), Bis-(3-chlor-2-hydroxypropyl)-äther, 1,4-Dichlor-2,3-epoxy-butan;
Bis-epoxy-Verbindungen, z. B. 1,2,3,4-Diepoxybutan, Diglycidyläther, Äthan-1,2-bis-glycidyläther, Butan-1,4-bis-glycidyläther;
$\omega$-Halogencarbonsäurehalogenide, z. B. Chloracetylchlorid, 2-Chlorpropionylchlorid, 3-Chlorpropionylchlorid, 3-Brompropionylbromid;
Vinylverbindungen, z. B. Divinyläther, Divinylsulfon, Methylenbisacrylamid;
weiterhin 4-Chlormethyl-1,3-dioxolanon-(2) und 2-Chloräthyl-chlorameisensäureester, ferner Chlorameisensäureester, 3-Chlor-2-hydroxypropyläther und Glycidyläther von Polyalkylenoxiden, z. B. Polyäthylenoxiden, sowie von Umsetzungsprodukten von 1 bis 50 Mol Alkylenoxiden, wie Äthylenoxid und/oder Propylenoxid, mit 1 Mol zwei- oder mehrwertiger Polyole oder anderer mindestens zwei aktive Wasserstoffatome enthaltender Verbindungen;
trifunktionelle Verbindungen, wie 1,3,5-Triacryloylhexahydro-s-triazin.

Die Mengenverhältnisse der polyfunktionellen Verbindungen B zu den amidgruppenhaltigen mehrwertigen Aminen A werden zweckmäßigerweise so bemessen, daß die zur Bildung des gewünschten Kondensationsgrades des wasserlöslichen Polyamins nicht wesentlich überschritten werden. Die Mindestmengen an gegenüber Aminogruppen polyfunktionellen Verbindungen, die anzuwenden sind, um Einwirkungsprodukte mit dem gewünschten hohen Molekulargewicht bzw. Lösungen derselben mit der angestrebten Viskosität zu erhalten, sind hauptsächlich vom Molekulargewicht der beiden Komponenten abhängig und lassen sich durch Vorversuche von Fall zu Fall leicht feststellen.

Es werden pro Mol Stickstoffatom in den amidgruppenhaltigen Aminen A 0,1—0,5 Mol, insbesondere 0,15—0,3 Mol der polyfunktionellen Verbindung B eingesetzt.

Die Herstellung der erfindungsgemäßen Polyamine aus den amidgruppenhaltigen Aminen A und den polyfunktionellen Verbindungen B kann nach an sich bekannten Verfahren erfolgen, z. B. dadurch, daß man Mischungen aus A und B in wäßrigen Medien bei pH-Werten über 6 und bei Temperaturen zwischen 0 und 130°C so lange rührt, bis eine Probe der Reaktionsmischung in Form einer 10%igen wäßrigen Lösung bei 25°C eine Viskosität von mindestens 10 cP aufweist. Häufig ist es von Vorteil, wenn man zu den amidgruppenhaltigen Aminen A im wäßrigen Milieu die polyfunktionellen Verbindungen unter sonst gleichen Reaktionsbedingungen portionsweise nach und nach zusetzt bis die gewünschte Viskosität erreicht ist. Der Gehalt der Reaktionslösung an Einwirkungsprodukten, der vorzugsweise zwischen 10 und 30 Gewichtsprozent liegt, wird dann, falls die Reaktion bei einer höheren Konzentration durchgeführt wurde, durch Verdünnen mit Wasser auf den gewünschten

Endwert eingestellt. In manchen Fällen ist es zur Beendigung der Einwirkung nach Erreichen der angestrebten Viskosität notwendig, den pH-Wert der Reaktionslösung durch Zugabe von Säuren, z. B. Salzsäure, Schwefelsäure, Phosphorsäure oder Essigsäure, auf pH 6, vorzugsweise auf 4 bis 5 einzustellen. Dies trifft vor allem für den Fall zu, daß die zur Bildung des gewünschten Kondensationsgrades des wasserlöslichen Polyamins erforderliche Mindestmenge an funktionellen Verbindungen erheblich überschritten worden ist.

Die Kondensation kann aber auch in einem geschlossenem Gefäß bei Temperaturen oberhalb des Siedepunktes der gegenüber Aminogruppen polyfunktionelle Verbindung B, insbesondere bei Verwendung von Dihalogenalkanen, vorzugsweise zwischen 90—130°C bei Drucken bei 5 bar durchgeführt werden. Ein Abstoppen der Reaktion ist durch Zugabe von Säure hierbei normalerweise nicht erforderlich.

Die Gesamtkonzentration der Komponenten in der wäßrigen Reaktionsmischung sollte 10 bis 60 Gewichtsprozent betragen.

Die erfindungsgemäßen Polyamine sind durch ein Mindestmolekulargewicht von 2500, vorzugsweise 5000, gekennzeichnet. Die obere Grenze ihres Molekulargewichtes ist durch ihre Eigenschaft, wasserlöslich zu sein, gegeben. Eine zahlenmäßige Beschreibung der oberen Grenze ihres Molekulargewichtes ist nicht möglich, da diese stark von den zugrundeliegenden Polyaminen und der Zahl der in ihnen enthaltenen wasserlöslich-machenden Gruppen abhängt.

Bei der Verwendung der erfindungsgemäßen Polyamine als Hilfsmittel zur Erhöhung der Retention von Fasern, Füllstoffen und Pigmenten sowie als Entwässerungsbeschleunigungsmittel geht man in an sich bekannter Weise so vor, daß man die erfindungsgemäßen Polyamine in Form verdünnter wäßriger Lösungen der Papierrohstoffsuspension vor dem Stoffauflauf zusetzt, wobei die Dosierstelle so gewählt wird, daß eine gute Verteilung des Hilfsmittels in der Rohstoffsuspension gesichert ist, aber eine zu lange Kontaktzeit vermieden wird. Die Mengen an Polyaminen, die zur Erzielung der gewünschten retentierenden Wirkung und/oder entwässerungsbeschleunigenden Wirkung erforderlich sind, lassen sich durch Vorversuche ohne Schwierigkeiten ermitteln; im allgemeinen empfiehlt es sich, 0,005 bis 0,5 Gewichtsprozent an Polyaminen, bezogen auf das Trockengewicht des Papiers, zu verwenden. Der Zusatz von erfindungsgemäßen Polyaminen vor dem Stoffauflauf einer Papiermaschine wirkt sich außerdem vorteilhaft bei der Aufarbeitung der Papiermaschinenabwässer durch Filtration, Flotation oder Sedimentation aus; die koagulierende Wirkung der erfindungsgemäßen Polyamine erleichtert die Abtrennung von Papierstoffbestandteilen aus dem Papiermaschinenabwasser sehr wesentlich.

Bei der Verwendung der erfindungsgemäßen Polyamine als Hilfsmittel bei der Aufarbeitung von Papiermaschinenabwässern durch Filtration, Flotation oder Sedimentation kann man ebenfalls in an sich bekannter Weise vorgehen, bevorzugt in der Weise, daß man die in Betracht kommenden Umsetzungsprodukte in Form von verdünnten wäßrigen Lösungen dem Papiermaschinenabwasser zweckmäßig vor Eintritt in den Stoffänger zusetzt.

Die Mengen an Polyaminen, die eine ausreichende Koagulation der in Papiermaschinenabwässern enthaltenen Papierrohrstoffbestandteile bewirken, sind nach der Zusammensetzung der Abwässer zu bemessen und lassen sich von Fall zu Fall durch Vorversuche leicht ermitteln; im allgemeinen sind hierfür Mengen von 0,005 bis 2 g Polyamin pro $m^3$ Abwasser ausreichend.

Die erfindungsgemäßen Polyamine zeigen überraschenderweise im Vergleich zu den bekannten aus polyfunktionellen Verbindungen und den vierschiedenartigsten »Polyamidaminen« hergestellten Umsetzungsprodukten im Anwendungsbereich von pH 4,0—8,0 eine Steigerung der retendierenden Wirksamkeit sowie der Entwässerungsbeschleunigung, wobei der Steigerungsgrad besonders hoch im neutralen bis schwach alkalischen Milieu ist. Dadurch erreichen die erfindungsgemäßen Polyamine nicht nur fast immer die Wirksamkeit der im neutralen oder schwach alkalischen Milieubesten Produkte, der Umsetzungsprodukte von Polyalkylenpolyaminen mit bifunktionellen Verbindungen, sondern sind sogar vielfach besser als diese.

Aus DE-AS 17 71 814 (Kolumne 3, Zeilen 21—29) ist zu entnehmen, daß Polyamide, die mit größeren als sonst üblichen Mengen spezieller Polyalkylenpolyamine hergestellt werden — was zur Erhöhung des basischen Stickstoffgehalts und somit des Gehalts kationischer Gruppen führt — eine niedrigere retendierende Wirksamkeit sowie eine geringere Entwässerungsbeschleunigung aufweisen sollten als Polyamide mit einem geringeren Gehalt kationischer Gruppen.

Dieses Vorurteil wird nun durch Bereitstellung der erfindungsgemäßen Polyamide überwunden, denn im Falle der vorliegenden Erfindung führt der Einbau größerer als sonst üblicher Mengen an speziellen Polyalkylenpolyaminen C in Polyamide überraschenderweise zu Produkten mit höhrerer retendierender Wirksamkeit sowie größerer Entwässerungsbeschleunigung.

FR-PS 2 249 104 beinhaltet die Herstellung basischer Polyaminoamide, wobei man eine polyfunktionelle Verbindung (vorzugsweise ein Chlorhydrin, wie z. B. Epichlorhydrin oder Dichlorhydrin) auf ein tertiäres Monoamin einwirken läßt und die so erhaltene Ammoniumverbindung mit einem basischen Polyaminoamid umsetzt. Die Produkte gemäß FR-PS 2 249 104 besitzen jedoch eine den erfindungsgemäßen Produkten unterlegene entwässerungsbeschleunigende Wirksamkeit.

Als besonders wirkungsvoll haben sich dabei die Polyamine herausgestellt, die sich aus mit Gemischen von Polyalkylenpolyaminen c, vor allem aus dem auf S. 3 unter Nr. 2 beschriebenen

Polyäthylenpolyaminen-Gemischen hergestellten amidgruppenhaltigen mehrwertigen Aminen A, insbesondere mit 1,2-Dihalogenalkanen, aufbauen lassen. Vielfach wird das Optimum der Wirksamkeit mit den amidgruppenhaltigen mehrwertigen Aminen erzielt, die im Molverhältnis von Dicarbonsäuren bzw. seiner Gemische a zu Polyalkylenpolyaminen bzw. seiner Gemische c von 1 : 1,75—2,5 hergestellt werden. Sehr gute Wirksamkeit zeigen auch diejenigen mehrwertigen Amine A, die hauptsächlich aus den Komponenten b und c mit nur sehr geringen Mengen an a aufgebaut sind, insbesondere in dem Molverhältnis a : b : c = 1—3 : 10—20 : 10—20. Viele der erfindungsgemäßen Polyamine haben eine Wirksamkeit, die in allen pH-Bereichen den Spitzenwert des jeweils besseren der bekannten, im folgenden genannten beiden Produkte I und II erreichen, ja z. B. sogar übertreffen.

Einige erfindungsgemäße Polyamine und ihre Verwendung zur Erhöhung der retention von Fasern, Füllstoffen und Pigmenten sowie zur Entwässerungsbeschleunigung bei der Papierherstellung sind nachstehend beispielsweise beschrieben.

## Herstellungsbeispiele

### Herstellung der Polyalkylenpolyamine c)

#### Polyalkylenpolyamin 1

Aus dem durch kontinuierliche Umsetzung von Dichloräthan, wäßrigem Ammoniak und Äthylendiamin im Molverhältnis von 1 : 17 : 0,4 bei 160—220°C und 100 bar erhaltenem Reaktionsgemisch wird unter Druck zunächst das überschüssige Ammoniak abgetrennt und dann bei 130—135°C mit überschüssiger 50%iger Natronlauge die entstandenen Basen aus ihren Hydrochloriden in Freiheit gesetzt. Dabei destilliert der größte Teil des Wassers und des Äthylendiamins ab, während sich die höhersiedenden Basen flüssig abscheiden. Das so erhaltene Basengemisch enthält neben 15—20% Wasser und 3—5% Äthylendiamin, etwa 15—20% Diäthylentriamin, 2—3% Aminoäthylpiperazin, ~1% $NH_2-CH_2-CH_2-NHCH_2\ CH_2-OH$, 15—18% Triäthylentetramin, 3—4% Tetraäthylentetramin, 10—14% Tetraäthylenpentamin, 6—10% Pentaäthylenhexamin, sowie rund 10—15% höhere Polyäthylenpolyamine und geringe Mengen an Kochsalz und Natriumhxydroxid.

#### Polyalkylenpolyamin 2

Aus dem gemäß c/1 erhaltenen Basengemisch wird zunächst unter Normaldruck, dann unter vermindertem Druck von etwa 100 mbar das restliche Wasser, Äthylendiamin sowie der größte Teil des Diäthylentriamins abdestilliert und das sich abscheidende Kochsalz durch Filtration entfernt.

#### Polyalkylenpolyamin 3

Aus dem gemäß c/1 erhaltenen Basengemisch wird außer Wasser, Äthylendiamin und Diäthylentriamin auch noch der größte Teil des Triäthylentetramins bei einem Endvakuum von etwa 10—15 Torr destillativ abgetrennt und die sich abscheidenden Anorganika ebenfalls durch Filtration entfernt, wobei die Filtration durch Zusatz von Kieselgur erleichtert und das Amingemisch durch Verwendung von A-Kohle zudem merklich aufgehellt werden kann.

#### Polyalkylenpolyamin 4

Eine Mischung aus 1 Teil Äthylendiamin und 1 Teil Wasser wird mit 0,4 Teilen Dichloräthan kontinuierlich bei 60 bis 130°C und 60 bar Druck umgesetzt. Das erhaltene Reaktionsgemisch wird bei 135°C mit überschüssiger 50%iger Natronlauge versetzt, wobei das Wasser sowie das nicht umgesetzte Äthylendiamin abdestilliert. Die höhersiedenden Basen, im wesentlichen eine Mischung aus Triäthylentetramin, Pentaäthylenhexamin, Heptaäthylenoktamin, sowie geringe Mengen noch höher kondensierter Polyäthylenpolyamine, werden in flüssiger Form abgeschieden.

#### Polyalkylenpolyamin 5

Wie bei der Herstellung von c/4, jedoch mit dem Unterschied, daß anstelle von Äthylendiamin Propylendiamin (1,2) verwendet wird.

Polyalkylenpolyamin 8

Wie bei der Herstellung von c/4, jedoch mit dem Unterschied, daß anstelle von Äthylendiamin eine Mischung von

$$NH_2-CH_2CH_2-CH_2-NHCH_2CH_2-NH_2 + NH_2CH_2CH_2CH_2-NHCH_2CH_2-NHCH_2CH_2CH_2-NH_2$$

das durch Umsetzung von Äthylendiamin mit 1,5 Mol Acrylnitril und nachfolgender Hydrierung erhalten wurde, verwendet wird.

Herstellung der amidgruppenhaltigen mehrwertigen Amine A

Amidgruppenhaltiges Amin 1

In einem 2-Liter-Dreihalskolben werden 461 g des unter c/2 erwähnten Polyäthylenpolyamins mit einem Amin-Val von 43,7 und einem mittleren Molekulargewicht von 205 (2,25 Mol) vorgelegt. Unter Rühren werden dann 146 g Adipinsäure (1 Mol) so schnell zugegeben, daß die Innentemperatur infolge Neutralisationswärme auf 125 bis 135°C ansteigt. Die klare Schmelze des Salzes wird darauf unter Überleiten eines schwachen Stickstoffstromes innerhalb von 3 Stunden auf 195 bis 200°C erhitzt und behält diese Temperatur noch 3 Stunden bei. Die Polykondensation ist dabei unter Übergang von 46,4 g Wasser (10,4 g mehr als für die reine Polyamidbildung berechnet — weist auf zusätzliche Bildung von Imidazolinringen aus der Polyamidgruppe und einer benachbarten sek. Aminogruppe hin) und 0,6 g niedrigsiedender Polyäthylenpolyamine (evtl. Diäthylentriamin) beendet. Das Umsetzungsprodukt wird dann auf etwa 130 bis 140°C abgekühlt und bei dieser Temperatur werden 560 g Wasser schnell zugesetzt. Es bildet sich dabei eine klare, gelbe 50%ige wäßrige Lösung des Polyamids.

| | |
|---|---|
| Viskosität: | 88 m Pas/50%ig/25°C |
| Basenstickstoffgehalt: | 11,52% entsprechend 121,5 g/Val |

Das wasserfreie amidgruppenhaltige mehrwertige Amin hat bei 150°C eine Viskosität von 25 m Pas.

Amidgruppenhaltiges Amin 2

Dieses amidgruppenhaltige Amin wird analog Amin 1 aus 359 g Polyalkylenpolyamin c/2 (1,75 Mol) und 146 g Adipinsäure (1 Mol) hergestellt.

Das wasserfreie amidgruppenhaltige Amin hat bei 150°C eine Viskosität von 66 m Pas.

Die erhaltene 50%ige wäßrige Lösung weist folgende Kennzahlen auf:

| | |
|---|---|
| Viskosität: | 119 m Pas bei 25°C |
| Basen-Stickstoff: | 9,99% entsprechend 140,1 g/Val |

Amidgruppenhaltiges Amin 3

Dieses amidgruppenhaltige Amin wird analog Amin 1 aus 333 g des unter c/3 erwähnten Polyalkylenpolyamingemisches mit einem Amin-Val von 43,4 und einem mittleren Molekulargewicht von 222 (1,5 Mol) und 146 g Adipinsäure (1 Mol) hergestellt.

Die ·haltene 50%ige wäßrige Lösung hat folgende Kennzahlen:

| | |
|---|---|
| Viskosität: | 551 m Pas bei 25°C |
| Basen-Stickstoff: | 9,55% entsprechend 146,6 g/Val |

Amidgruppenhaltiges Amin 4

Analog Amin 3 wird dieses amidgruppenhaltige Amin aus 399,5 g des gleichen Polyalkylenpolyamins c/3 (1,8 Mol) und 146 g Adipinsäure (1 Mol) hergestellt.

Die erhaltene 50%ige wäßrige Lösung weist folgende Kennzahlen auf:

| | |
|---|---|
| Viskosität: | 416 m Pas bei 25°C |
| Basen-Stickstoff: | 10,25% entsprechend 136,6 g/Val |

Amidgruppenhaltiges Amin 5

Analog Amin 3 wird dieses amidgruppenhaltige Amin aus 488 g des gleichen Polyalkylenpolyamins c/3 (2,2 Mol) und 146 g Adipinsäure (1 Mol) hergestellt.
Die so hergestellte 50%ige wäßrige Lösung hat folgende Kennzahlen:

| | |
|---|---|
| Viskosität: | 172 m Pas bei 25° C |
| Basen-Stickstoff: | 11,44% entsprechend 122,4 g/Val |

Amidgruppenhaltiges Amin 6

Analog Amin 1 werden 444 g (2Mol) des Polyalkylenpolyamins, das unter c/3 aufgeführt ist, mit 452 g ε-Caprolactam (4 Mol) und 29 g (0,2 Mol) Adipinsäure umgesetzt. Man erhitzt innerhalb von 5 Stunden auf 230° C und kondensiert weitere 15 Stunden bei dieser Temperatur. Die weitere Aufarbeitung erfolgt wie unter Amin 1. Es fallen 25 g Destillat an. Die 50%ige wäßrige Lösung des amidgruppenhaltigen Amins weist eine Viskosität von ungefähr 110 m Pas bei 25° C und ein Äquivalentgewicht von ungefähr 189 auf.

Amidgruppenhaltiges Amin 7

Analog des amidgruppenhaltigen mehrwertigen Amins 1 wird dieses Amin aus 337 g des unter c/1 erwähnten Polyäthylenpolyamin-Gemisches mit einem Wassergehalt von 17%, einem Amin-Val von 48,6 und einem mittleren Molekulargewicht des reinen Amins von 160 (1,75 Mol) und 146 g Adipinsäure (1 Mol) hergestellt.
Das amidgruppenhaltige Amin hat bei 150° C eine Viskosität von 221 m Pas.
Die erhaltene 50%ige wäßrige Lösung des amidgruppenhaltigen mehrwertigen Amins hat folgende Kennzahlen:

| | |
|---|---|
| Viskosität: | 123 m Pas bei 25° C |
| Basen-Stickstoff: | 8,75% entsprechend 160,0 g/Val |

Amidgruppenhaltiges Amin 8

Analog 7 wird dieses Amin aus 434 g des gleichen Polyäthylenpolyamins c/1 (2,25 Mol) und 146 g Adipinsäure (1 Mol) hergestellt.
Das wasserfreie Amin hat bei 150° C eine Viskosität von 42 m Pas.
Die daraus hergestellte 50%ige wäßrige Lösung hat folgende Kennzahlen:

| | |
|---|---|
| Viskosität: | 141 m Pas bei 25° C |
| Basen-Stickstoff: | 9,94% entsprechend 140,8 g/Val |

Amidgruppenhaltiges Amin 9

In einem Reaktionsgefäß mit Gaseinleitungsrohr und absteigendem Kühler werden 274 g des unter c/1 erwähnten Polyalkylenpolyamingemisches mit einem Wassergehalt von 17%, einem Amin-Val von 48,6 und einem mittleren Molekulargewicht des reinen Amins von 160 (1,42 Mol) mit 146 g Adipinsäure (1 Mol) unter Zusatz von 10 g Adipinsäuredihydrazid vermischt, und das Gemisch wird unter Rühren und Überleiten von sauerstofffreiem Stickstoff innerhalb von 4—5 Stunden auf 190° C erhitzt, wobei die Reaktionstemperatur im Bereich von 150—190° C in dem Maße erhöht wird, daß das entstehende Wasser gleichmäßig abdestilliert. Nachdem etwa 73 g Wasser und geringe Mengen Diäthylentriamin überdestilliert sind, wird das Reaktionsgemisch noch solange bei 190—180° C unter vermindertem Druck (20—50 mm/Hg) gerührt, bis insgesamt 130 g Destillat angefallen sind, dann auf 100° C abgekühlt und mit der gleichen Gewichtsmenge Wasser versetzt (288 g). Das gebildete amidgruppenhaltige mehrwertige Amin wird so in Form einer 50%igen wäßrigen Lösung erhalten, die eine Viskosität von 276 m Pas und ein Basenäquivalent von 189 aufweist.

Amidgruppenhaltiges Amin 10

In einem Reaktionsgefäß mit Gaseinleitungsrohr und absteigendem Kühler werden 582 g (3 Mol) des unter c/1 erwähnten Polyalkylenpolyamins mit einem Wassergehalt von 20,6% und einem mittleren Molekulargewicht des reinen Amins von 154 mit 339 g ε-Caprolactam (3 Mol) und 44 g (0,3 Mol)

Adipinsäure vermischt. Das Reaktionsgemisch wird unter Rühren und Überleiten von sauerstofffreiem Stickstoff innerhalb von 3 Std. auf 200°C erhitzt. Dann rührt man 10 Std. zwischen 200 und 205°C. Anschließend läßt man abkühlen und destilliert im Vakuum (20—40 mbar) bei 165—175°C solange, bis etwa 215 g Destillat angefallen sind. Die Reaktionsmischung wird auf 130°C abgekühlt und mit 750 g Wasser versetzt. Die so erhaltene 50%ige wäßrige Lösung des amidgruppenhaltigen Amins weist eine Viskosität von 70 bis 100 m Pas bei 25°C und ein Äquivalentgewicht von etwa 180 auf.

Amidgruppenhaltiges Amin 11

Dieses amidgruppenhaltige Amin wird analog 1 aus 265 g Tetraäthylenpentamin (1,4 Mol) und 146 g Adipinsäure (1 Mol) hergestellt.

Das wasserfreie Amin hat bei 150°C eine Viskosität von 291 m Pas.

Die daraus erhaltene 51%ige wäßrige Lösung weist bei 25°C eine Viskosität von 318 m Pas und ein Basen-Val von 171,1 g auf.

Amidgruppenhaltiges Amin 12

Diese amidgruppenhaltige Amin wird analog 1 aus 305 g N,N'-Bis-(3-aminopropyl)-äthylendiamin (1,75 Mol) und 146 g Adipinsäure (1 Mol) hergestellt.

Das wasserfreie Amin hat bei 150°C eine Viskosität von 42 m Pas.

Die daraus hergestellte 50%ige wäßrige Lösung weist folgende Kennzahlen auf:

| | |
|---|---|
| Viskosität: | 141 m Pas bei 25°C |
| Basen-Stickstoff: | 8,53% entsprechend 164,1 g/Val |

Umsetzung der amidgruppenhaltigen mehrwertigen Amine A mit polyfunktionellen Verbindungen B zu den erfindungsgemäßen »Polyaminen«

Polyamin 1

15,5 g 1,2-Dichloräthan werden unter sehr gutem Rühren und bei einer Temperatur von 87—93°C der Mischung aus 80 g 50%iger wäßriger Lösung des amidgruppenhaltigen mehrwertigen Amins A/1 und 60 g Wasser in der Geschwindigkeit zugesetzt, daß unter leichtem Sieden der Temperaturbereich gehalten werden kann — bei diesem Ansatz innerhalb zwei Stunden. Anschließend wird bei der gleichen Temperatur noch solange erhitzt, bis die Viskosität auf etwa 30—50 m Pas angestiegen ist. Daraufhin wird auf ca. 75°C abgekühlt, um in letzter Phase eine zu rasche Viskositätssteigerung zu verhindern. Bei dieser erniedrigten Temperatur wird dann noch solange kondensiert, bis die Viskosität so hoch ist, daß sich nach Fertigstellung des Produktes eine Viskosität von 350—600 m Pas/22,5%ig/25°C ergibt. Um dies zu erreichen, wird in dem etwa gleichhohen Viskositätsbereich, jedoch bei 75°C, die Kondensation beendet, und zwar durch Abkühlen, gleichzeitige schnelle Zugabe eines Gemisches von 15 g konz. Salzsäure und 20 g Wasser und durch anschließenden Zusatz von noch so viel konz. Salzsäure, daß sich ein pH-Wert von 5,0 einstellt, wozu noch etwa 11 g nötig sind. Während des Abkühlens wird dann noch 1—2 Std. unter vermindertem Druck (6666 Pa [50 Torr]) gerührt, um nicht umgesetztes 1,2-Dichloräthan (etwa 0,5 g) restlos zu entfernen. Am Ende wird dann noch mit Wasser auf 195,1 g zur 22,5%igen Lösung des Umsetzungsproduktes (als freie Base, also ohne Chlorhydrat berechnet) aufgefüllt. Die erforderliche Reaktionszeit beträgt etwa 8 Stunden.

| | |
|---|---|
| Viskosität: | 350—600 m Pas/22,5%ig/25°C. |

Polyamin 2

Dieses Polyamin wird analog Polyamin 1 aus 80 g 50%iger wäßriger Lösung des amidgruppenhaltigen mehrwertigen Amins A/2 und 11,1 g 1,2-Dichloräthan hergestellt.

Die erhaltene 50%ige wäßrige Lösung weist bei 25°C eine Viskosität von 398 m Pas auf.

Polyamin 3

Ein Gemisch aus 80 g der 50%igen wäßrigen Lösung des amidgruppenhaltigen mehrwertigen Amins A/5 und 60 g Wasser wird bei 30°C unter Rühren innerhalb von 15 Minuten tropfenweise mit 13,0 g

**Epichlorhydrin versetzt und anschließend unter Rühren auf 65—70°C erwärmt. Sobald die Lösung bei dieser Temperatur eine Viskosität von etwa 150—200 m Pas aufweist, was nach etwa 2 bis 3 Std. der Fall ist, zeigt nach Zugabe von konz. Salzsäure bis zu einem pH-Wert von 4,5 und Wasser bis zu einer 22,5%igen wäßrigen Lösung des Polyamins zeigt das Produkt eine Viskosität von 318 m Pas bei 25°C.**

Polyamin 4

Das Polyamin wird analog Polyamin 3 aus 80 g der 50%igen wäßrigen Lösung des amidgruppenhaltigen mehrwertigen Amins A/4, 60 g Wasser und 10,6 g Epichlorhydrin hergestellt. Nach Zugabe von konz. Salzsäure bis zu einem pH-Wert von 4,0 und Wasser bis zu einer 22,5%igen wäßrigen Lösung des Polyamins hat das Produkt eine Viskosität von 306 m Pas bei 25°C.

Analoge Produkte, die annähernd die gleiche Wirksamkeit als Retentions- sowie Entwässerungsbeschleunigungsmittel aufweisen, werden erhalten, wenn anstelle von Epichlorhydrin folgende polyfunktionelle Substanzen eingesetzt werden

$$Cl—CH_2—CH_2—NHCO—CH_2—Cl$$

$$Cl—CH_2—CONH—CH_2CH_2—NHCO—CH_2Cl$$

$$Cl—CH_2—CH_2—NHCONH—CH_2—CH_2—Cl$$

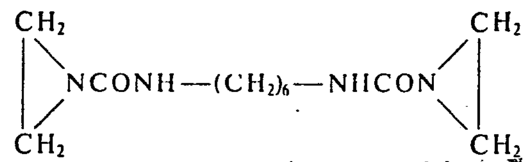

Butan-1,4-bis-glycidyläther und Triglycidyläther aus 1 Mol Trimethylolpropan, 10 Mol Äthylenoxid und 3 Mol Epichlorhydrin.

Polyamin 5

Das Polyamin wird analog der Polyamine 3 und 4 aus 80 g der 50%igen wäßrigen Lösung des amidgruppenhaltigen mehrwertigen Amins A/3, 60 g Wasser und 7,4 g Epichlorhydrin hergestellt.

Die so erhaltene 22,5%ige wäßrige Lösung des Polyamins 8 zeigt eine Viskosität von 343 m Pas bei 25°C.

Polyamin 6

Dieses Polyamin wird analog Polyamin 1 aus 80 g der 50%igen wäßrigen Lösung des amidgruppenhaltigen mehrwertigen Amins A/3 und 9,0 g 1,2-Dichloräthan hergestellt.

Die 22,5%ige wäßrige Lösung des Polyamins 6 hat eine Viskosität von 404 m Pas bei 25°C.

Polyamin 7

3,6 kg der 50%igen wäßrigen Lösung des mehrwertigen Amins A/1 werden in einem verschließbaren Gefäß auf 75°C erwärmt und dann bei geschlossener Entlüftung portionsweise mit 1,2-Dichloräthan unter gutem Rühren versetzt. Dabei erweist es sich von Vorteil, wenn das Dichloräthan möglichst fein verteilt unter die Oberfläche der Reaktionsmischung eingegeben wird, z. B. durch eindüsen. Die Temperatur der Reaktionsmischung soll im Laufe der Umsetzung auf 115—120°C ansteigen.

Beim Erreichen einer Viskosität von 1000 m Pas bezogen auf 25°C wird die Zugabe des 1,2-Dichloräthans beendet — Gesamtverbrauch etwa 0,68 kg. Nach einer Nachrührzeit von rund 30 Minuten wird das Reaktionsgefäß entspannt und durch Anlegen eines Vakuums von 200—25 mbar die Reaktionsmischung auf 60—70°C abgekühlt. Die so erhaltene Reaktionsmischung ist auch ohne

Zugabe von Säure lagerstabil. Sie weist bei einer 22,5%igen Einstellung eine Viskosität von 500 m Pas bei 25° C und einen pH-Wert von 7,8 auf.

Polyamin 8

In einem Reaktionsgefäß mit Rückflußkühler werden 95 g (0,5 Val) der 50%igen Lösung des mehrwertigen Amins A/6 mit 11 g (0,12 Mol) Epichlorhydrin und 50 g Wasser auf 68—70° C erwärmt. Man rührt bei dieser Temperatur solange, bis eine Viskosität von 100 m Pas erreicht ist. Dann verdünnt man mit 30 g Wasser und rührt bei 68—70° C, bis eine Viskosität von 300—320 m Pas erreicht ist. Die Reaktionslösung wird dann mit 20 g konz. HCl und 34 g Wasser versetzt und abgekühlt. Die so erhaltene 25%ige Lösung besitzt einen pH-Wert von 5 und eine Viskosität zwischen 300 und 500 m Pas.

Polyamin 9

Dieses Polyamin wird analog Polyamin 1 aus 80 g der 50%igen wäßrigen Lösung des amidgruppenhaltigen mehrwertigen Amins A/7 und 14,6 g 1,2-Dichloräthan hergestellt.

Die 22,5%ige wäßrige Lösung des Polyamins 12 hat eine Viskosität von 382 m Pas bei 25° C.

Polyamin 10

In einem Reaktionsgefäß mit Rückflußkühler wird ein Gemisch aus 100 g der 50%igen wäßrigen Lösung des amidgruppenhaltigen mehrwertigen Amins A/9, 80 g Wasser und 6,5 g 1,2-Dichloräthan solange auf 80 bis 90° C gerührt, bis die Viskosität der Reaktionsmischung auf etwa 480 m Pas bei 80° C angestiegen ist (etwa nach 7 Stunden). Hierauf wird die Lösung mit konz. Salzsäure auf pH 5,0 und Wasser bis zu einem Gehalt von 22,5% des Polyamins versetzt. Die Viskosität der Lösung hat einen Wert von 544 m Pas bei 25° C.

Polyamin 11

In einem Reaktionsgefäß mit Rückflußkühler wird ein Gemisch aus 90 g (0,5 Val) der 50%igen wäßrigen Lösung des amidgruppenhaltigen mehrwertigen Amins A/10 mit 50 g Wasser und 14 g (0,15 Mol) Epichlorhydrin auf 68—70° C erwärmt und solange bei dieser Temperatur gerührt, bis die Viskosität der Reaktionslösung auf etwa 100 m Pas angestiegen ist. Dann verdünnt man mit 40 g Wasser und kondensiert bei 68—70° C solange weiter, bis eine Viskosität von 350—380 m Pas erreicht ist. Die Lösung wird dann mit 30 g konz. HCl und 14 g Wasser versetzt und abgekühlt. Die so erhaltene 22,5%ige Lösung besitzt einen pH-Wert von 4,5 und eine Viskosität von 500—900 m Pas bei 25° C.

Polyamin 12

Das Polyamin wird analog Polyamin 3 aus 80 g der 50%igen wäßrigen Lösung des amidgruppenhaltigen mehrwertigen Amins A/11, 60 g Wasser und 8 g Epichlorhydrin hergestellt. Nach Zugabe von konz. Salzsäure bis zu einem pH-Wert von 3,0 — es sind 30,9 g nötig — und Wasser bis zu einer 22,5%igen wäßrigen Lösung des Polyamins zeigt das Produkt eine Viskosität von 387 m Pas bei 25° C.

Polyamin 13

Das Polyamin wird analog Polyamin 3 aus 80 g der 50%igen wäßrigen Lösung des amidgruppenhaltigen mehrwertigen Amins A/12, 60 g Wasser und 8,8 g Epichlorhydrin hergestellt. Nach Zugabe von konz. Salzsäure bis zu einem pH-Wert von 4,5 — es sind 30,5 g nötig — und Wasser bis zu einer 22,5%igen wäßrigen Lösung des Polyamins zeigt das Produkt eine Viskosität von 412 m Pas bei 25° C.

Polyamin 14

Das Polyamin wird analog Polyamin 3 aus einem Gemisch aus 40 g der 50%igen wäßrigen Lösung des amidgruppenhaltigen mehrwertigen Amins A/11, 40 g der 50%igen wäßrigen Lösung des amingruppenhaltigen mehrwertigen Amins A/12, 60 g Wasser und 8,4 g Epichlorhydrin hergestellt.

Die 22,5%ige wäßrige Lösung hat eine Viskosität von 457 m Pas bei 25° C.

## Polyamin 15

Das Polyamin wird analog Polyamin 1 aus einem Gemisch aus 40 g der 50%igen wäßrigen Lösung des amidgruppenhaltigen mehrwertigen Amins A/11, 40 g der 50%igen wäßrigen Lösung des amingruppenhaltigen mehrwertigen Amins A/12, 60 g Wasser und 8,4 g Epichlorhydrin hergestellt. Die 22,5%ige wäßrige Lösung hat eine Viskosität von 457 m Pas bei 25°C.

## Beispiel 1

Auf einer Laborpapiermaschine (Typ Kämmerer) wurden aus 70% gebleichtem Nadelholzsulfitzellstoff und 30% gebleichtem Buchensulfatzellstoff Papiere (circa 80 g/m²) hergestellt. Dabei wurde einmal im sauren Bereich, zum anderen bei neutralen pH-Werten gearbeitet:

a) Saurer Bereich:
Zusatz von 30% China Clay als Füllstoff,
1% Harzleim und
3% Aluminiumsulfat
zur Papiermasse. Der pH-Wert wurde mit Schwefelsäure auf 4,8 eingestellt.

b) Neutraler Bereich:
Zusatz von 30% Calciumcarbonat als Füllstoff,
1% Aquapel 360 XZ (synthetischer Leim auf Basis Stearyldiketen von Fa. Hercules Inc.)
zur Papiermasse. Der pH-Wert wurde mit Natronlauge auf 7,8 bis 8 eingestellt.

Vor dem Stoffauflauf der Papiermaschine wurden mittels Dosierpumpe die 1%igen wäßrigen Lösungen der 22,5%igen Polyamine 1 bis 18 zudosiert. Zum Vergleich wurden ebenfalls 1%ige Verdünnungen der folgenden bekannten Produkte zudosiert: Die als Retentionsmittel bekannten »Polyamidamine« Ia (= Beispiel 1 der DE-PS 1 771 814) und Ib (= Beispiel 1 der GB-PS 1 035 296); die als Naßfestmittel bekannten »Polyamidamine« IIa/1 (= Beispiel 1 der US-PS 3 320 215), IIa/2 (= Beispiel 5 der US-PS 3 320 215) und IIb (= Beispiel 1 der US-PS 2 926 154) sowie das als Retentionsmittel bekannte Polyalkylenpolyamin III (= Beispiel 1 der DE-PS 2 351 754). Als Maß für die Retentionswirkung wurde der Feststoffgehalt im Abwasser der Papiermaschine bestimmt. Je geringer dieser Feststoffgehalt, um so besser ist die Retentionswirkung.

Die folgende Tabelle 1 veranschaulicht, daß die erfindungsgemäßen Polyamine sowohl im sauren wie im neutralen Bereich eine sehr gute Retentionswirkung besitzen und daß diese besser ist als diejenige, die bei Einsatz der bekannten »Polyamidamin«-Retentions- und Naßfestmittel erhalten werden. Wie zu ersehen ist, erreichen die erfindungsgemäßen Polyamine im neutralen bis schwach alkalischen Milieu sogar nicht nur überwiegend die Wirksamkeit der Polyalkylenpolyamine, sondern übertreffen diese in vielen Fällen erheblich, während sie im sauren Milieu stets besser, ja sogar größtenteils bedeutend besser als diese sind. Die Zusatzmengen beziehen sich jeweils auf das Gewicht des lufttrockenen Zellstoffes sowie auf die 22,5%ige Lösung des Retentionsmittels.

Tabelle 1

| Retentionsmittel | Zusatzmenge [%] | Trockenrückstand im Abwasser [mg/l] a) saurer Bereich pH 4,8 | b) neutraler Bereich pH 7,8 |
|---|---|---|---|
| Ohne Polyamin | | 617 | 751 |
| 1 | 0,1 | 153 | 146 |
| 2 | 0,1 | 156 | 156 |
| 3 | 0,1 | 182 | 192 |
| 4 | 0,1 | 184 | 196 |
| 5 | 0,1 | 187 | 198 |
| 6 | 0,1 | 171 | 191 |
| 7 | 0,1 | 152 | 141 |
| 8 | 0,1 | 192 | 276 |
| 9 | 0,1 | 158 | 169 |
| 10 | 0,1 | 163 | 179 |
| 11 | 0,1 | 195 | 289 |
| 12 | 0,1 | 202 | 304 |
| 13 | 0,1 | 181 | 211 |
| 14 | 0,1 | 168 | 191 |
| 15 | 0,1 | 157 | 163 |
| Ia | 0,1 | 192 | 376 |
| Ib | 0,1 | 203 | 410 |
| IIa/1 | 0,1 | 233 | 437 |
| IIa/2 | 0,1 | 241 | 443 |
| IIb | 0,1 | 254 | 447 |
| III | 0,1 | 201 | 195 |

Beispiel 2

Als Maß für die auf einer Papiermaschine der Praxis zu erwartende Entwässerungsbeschleunigung wurde der Mahlgrad nach Schopper-Riegler bestimmt. Je stärker der Mahlgrad durch das zugesetzte Retentionsmittel erniedrigt wird, umso besser ist die zu erwartende Entwässerungsbeschleunigung.

Gemischtes Altpapier wurde am Schnellrührer aufgeschlagen und der pH-Wert eingestellt:

a) Saurer Bereich:
Zusatz von 0,5% Aluminiumsulfat, Einstellung von pH 4,5 mit Schwefelsäure.

b) Neutraler Bereich:
Einstellung von pH 7,2 mit Natronlauge.

Zu 200 ml der nach a) oder b) vorbereiteten 1%igen Papierstoff-Suspension wurde jeweils die 1%ige

Lösung mit Wasser auf 1000 ml aufgefüllt und mit Hilfe des Schopper-Riegler-Gerätes der Mahlgrad bestimmt.

Die Zusatzmengen beziehen sich jeweils auf das Gewicht des lufttrockenen Papierstoffes sowie auf die 22,5%ige Lösung der Polyamine 1 bis 18.

Die folgende Tabelle 2 veranschaulicht den guten Entwässerungseffekt der erfindungsgemäßen Polyamine sowohl im sauren wie im neutralen Bereich. Zum Vergleich wurden ebenfalls die im Beispiel 1 angeführten bekannten Retentions- und Naßfestmittel zudosiert.

Tabelle 2

| Entwässerungs-beschleunigungsmittel | Zusatzmenge [%] | Mahlgrad [°SR] a) saurer Bereich pH 4,5 | b) neutraler Bereich pH 7,3 |
|---|---|---|---|
| Ohne Polyamin | | 56 | 61 |
| 1 | 0,4 | 43 | 38 |
| 2 | 0,4 | 44 | 39 |
| 3 | 0,4 | 46 | 42 |
| 4 | 0,4 | 46 | 43 |
| 5 | 0,4 | 47 | 44 |
| 6 | 0,4 | 46 | 42 |
| 7 | 0,4 | 43 | 37 |
| 8 | 0,4 | 47 | 45 |
| 9 | 0,4 | 45 | 39 |
| 10 | 0,4 | 45 | 40 |
| 11 | 0,4 | 47 | 45 |
| 12 | 0,4 | 48 | 46 |
| 13 | 0,4 | 46 | 42 |
| 14 | 0,4 | 46 | 41 |
| 15 | 0,4 | 44 | 39 |
| Ia | 0,4 | 47 | 49 |
| Ib | 0,4 | 48 | 50 |
| IIa/1 | 0,4 | 51 | 53 |
| IIa/2 | 0,4 | 51 | 52 |
| IIb | 0,4 | 52 | 53 |
| III | 0,4 | 50 | 42 |

**Patentansprüche**

1. Wasserlösliche, nicht selbstvernetzende Polyamine, erhalten durch Umsetzung von

A) einem oder mehreren amidgruppenhaltigen mehrwertigen Aminen, hergestellt durch Kondensation von
   a) 1 Mol Dicarbonsäuren bzw. deren funktionellen Derivaten,
   b) 0 bis 30 Mol mindestens drei C-Atome enthaltenden Aminocarbonsäuren oder deren Lactamen und
   c) Polyalkylenpolyaminen der Formel

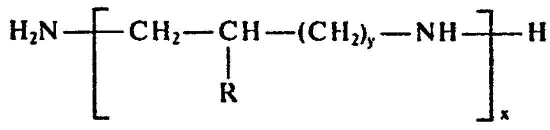

in der

R H oder $CH_3$
y gleich oder verschieden die Zahl 0 oder 1 und
x eine Zahl von 4 bis 15 bedeuten

oder Mischungen dieser Polyalkylenpolyamine mit Aminen der gleichen Formel, in der aber

x eine Zahl von 1 bis 3 bedeutet,

wobei gegebenenfalls ein Teil der zum Einsatz gelangenden Polyalkylenpolyamine c) durch andersartige Di-, Tri-, Tetra-, Penta- oder Hexamine ersetzt wird, und

B) gegenüber Aminogruppen polyfunktionellen Verbindungen in Mengen von 0,1 bis 0,5, insbesondere 0,15 bis 0,3 Mol je Mol Basenstickstoff des mehrwertigen Amins A,

dadurch gekennzeichnet, daß bei Abwesenheit von b) 1,4 bis 3,0 Mol c) und bei Mitverwendung von b) 3 bis 30 Mol c) eingesetzt werden.

2. Wasserlösliche, nicht selbstvernetzende Polyamine gemäß Anspruch 1, dadurch gekennzeichnet, daß als mehrwertige Amine A die Kondensationsprodukte eingesetzt werden, die aus Mischungen der Polyalkylenpolyamine c erhältlich sind.

3. Wasserlösliche, nicht selbstvernetzende Polyamine gemäß Ansprüchen 1 und 2, dadurch gekennzeichnet, daß als mehrwertige Amine A die Kondensationsprodukte eingesetzt werden, die aus Polyäthylenpolyaminen erhältlich sind.

4. Wasserlösliche, nicht selbstvernetztende Polyamine gemäß Ansprüchen 1 bis 3, dadurch gekennzeichnet, daß als mehrwertige Amine A die Kondensationsprodukte eingesetzt werden, die erhältlich sind durch Kondensation von a) 1 Mol Dicarbonsäure mit c) 1,75 bis 2,5 Mol Polyalkylenpolyaminen.

5. Wasserlösliche, nicht selbstvernetzende Polyamine gemäß Ansprüchen 1 bis 4, dadurch gekennzeichnet, daß als mehrwertige Amine A die Kondensationsprodukte eingesetzt werden, die erhältlich sind durch Kondensation von a) 1 Mol Dicarbonsäuren, b) 10—30 Mol mindestens drei C-Atome enthaltenden Aminocarbonsäuren oder deren Lactamen und c) 10 bis 30 Mol Polyalkylenpolyaminen.

6. Verfahren zur Herstellung wasserlöslicher Polyamine gemäß Ansprüchen 1 bis 5, dadurch gekennzeichnet, daß die Umsetzung der Reaktionspartner A und B in wäßrigem Medium bei Temperaturen von 0 bis 130°C, einer Gesamtkonzentration von 10 bis 60% und pH-Werten oberhalb von 6 vorgenommen werden.

7. Verwendung der wasserlöslichen Polyamine nach Anspruch 1 als Hilfsmittel zur Erhöhung der Retention von Fasern, Füllstoffen und Pigmenten sowie als Entwässerungsbeschleunigungsmittel bei der Papierherstellung und zur Aufarbeitung von Papiermaschinenabwässern durch Filtration, Sedimentation und Flotation.

8. Hilfsmittel zur Erhöhung der Retention von Fasern, Füllstoffen und Pigmenten sowie Entwässerungsbeschleunigungsmittel bei der Papierherstellung und zur Aufarbeitung von Papiermaschinenabwässern durch Filtration, Sedimentation und Flotation enthaltend als wirksamen Bestandteil wasserlösliche Polyamine gemäß Anspruch 1.

**Claims**

1. Water-soluble polyamines which are not self-crosslinking, obtained by reacting

A) one or more polyacidic amines containing amide groups, prepared by condensation of
   a) 1 mol of dicarboxylic acids or functional derivatives thereof,
   b) 0 to 30 mols of aminocarboxylic acids containing at least three C atoms, or lactams thereof and
   c) polyalkylenepolyamines of the formula

$$H_2N-\left[CH_2-\underset{\displaystyle R}{\underset{|}{CH}}-(CH_2)_y-NH\right]_x-H$$

   in which

   R denotes H or $CH_3$
   y is each case the same or different and denotes the number 0 or 1 and
   x denotes a number from 4 to 15

   or mixtures of these polyalkylenepolyamines with amines of the same formula, bit in which

   x denotes a number from 1 to 3,

   a proportion of the polyalkylenepolyamines c) employed if appropriate being replaced by other types of diamines, triamines, tetramines, pentamines or hexamines,

B) compounds which are polyfunctional towards amino groups, in amounts of 0.1 to 0.5 mol, in particular 0.15 to 0.3 mol, per mol of basic nitrogen in the polyacidic amine A,

characterised in that in the absence of b) 1.4 to 3.0 mols of c) are employed and if b) is also used 3 to 30 mols of c) are used.

2. Water-soluble polyamines which are not self-crosslinking, according to Claim 1, characterised in that the condensation products obtainable from mixtures of the polyalkylenepolyamines c are employed as the polyacidic amines A.

3. Water-soluble polyamines which are not self-crosslinking, according to Claims 1 and 2, characterised in that the condensation products obtainable from polyethylene-polyamines are employed as the polyacidic amines A.

4. Water-soluble polyamines which are not self-crosslinking, according to Claims 1 to 3, characterised in that the condensation products obtainable by condensation of a) 1 mol of dicarboxylic acid with c) 1.75 to 2.5 mols of polyalkylenepolyamines are employed as the polyacidic amines A.

5. Water soluble polyamines which are not self-crosslinking, according to Claims 1 to 4, characterised in that the condensation products obtainable by condensation of a) 1 mol of dicarboxylic acids, b) 10 to 30 mols of aminocarboxylic acids containing at least three C atoms, or lactams thereof, and c) 10 to 30 mols of polyalkylenepolyamines are employed as the polyacidic amines A.

6. Process for the preparation of water-soluble polyamines according to Claims 1 to 5, characterised in that the reaction of reactants A and B is carried out in an aqueous medium at temperatures from 0 to 120° C, at a total concentration of 10 to 60% and at pH values above 6.

7. Use of the water-soluble polyamines according to Claim 1 as auxiliaries for increasing the retention of fibres, fillers and pigments and as drainage accelerators for the production of paper and for working up effluents from paper machines by filtration, sedimentation and flotation.

8. Auxiliaries for increasing the retention of fibres, fillers and pigments, and drainage accelerators for the production of paper and for working up effluents from paper machines by filtration, sedimentation and flotation, containing water-soluble polyamines according to Claim 1 as the active constituent.

**Revendications**

1. Polyamines hydrosolubles, non autoréticulantes, obtenues par réaction

A) d'une ou plusieurs amines polyvalentes portant des groupes amide, produites par condensation
   a) d'une mole d'acides dicarboxyliques ou de leurs dérivés fonctionnels,
   b) de 0 à 30 moles d'acides aminocarboxyliques comprenant au moins 3 atomes de carbone ou de leurs lactames et

c) de polyalkylène-polyamines de formule:

$$H_2N - \left[ CH_2 - \underset{\displaystyle R}{\underset{|}{CH}} - (CH_2)_y - NH \right]_x - H$$

dans laquelle:

R représente H ou $CH_3$
y ayant des valeurs égales ou différentes représente le nombre 0 ou 1 et
x est un nombre de 4 à 15

ou des mélanges de ces polyalkylène-polyamines avec des amines de même formule, mais dans laquelle:

x est un nombre de 1 à 3,

une partie des polyalkylène-polyamines c) utilisées étant éventuellement remplacée par des diamines, des triamines, des tétramines, des pentamines ou des hexamines de nature différente, et

B) des composés polyfonctionnels vis-à-vis de groupes amino, en quantités de 0,1 à 0,5, notamment de 0,15 à 0,3 mole par mole d'azote basique de l'amine polyvalente A,

caractérisées en ce qu'on utilise en l'absence de b) 1,4 à 3,0 moles de c) et, en cas d'utilisation simultanée de b), 3 à 30 moles de c).

2. Polyamines hydrosolubles non autoréticulantes suivant la revendication 1, caractérisées en ce qu'on utilise comme amines polyvalentes A) les produits de condensation qui peuvent être obtenus à partir de mélanges des polyalkylène-polyamines c).

3. Polyamines hydrosolubles non autoréticulantes suivant les revendications 1 et 2, caractérisées en ce qu'on utilise comme amines polyvalentes A) les produits de condensation qui peuvent être obtenus à partir de polyéthylène-polyamines.

4. Polyamines hydrosolubles non autoréticulantes suivant les revendications 1 à 3, caractérisées en ce qu'on utilise comme amines polyvalentes A) les produits de condensation qui peuvent être obtenus par condensation de a) 1 mole d'acide dicarboxylique avec c) 1,75 à 2,5 moles de polyalkylène-polyamines.

5. Polyamines hydrosolubles non autoréticulantes suivant les revendications 1 à 4, caractérisées en ce qu'on utilise comme amines polyvalentes A) les produits de condensation qui peuvent être obtenus par condensation de a) 1 mole d'acides dicarboxyliques, b) 10 à 30 moles d'acides aminocarboxyliques comprenant au moins 3 atomes de carbone ou de leurs lactames et c) 10 à 30 moles de polyalkylène-polyamines.

6. Procédé de production de polyamines hydrosolubles suivant les revendications 1 à 5, caractérisé en ce que la réaction des partenaires réactionnels A et B est conduite en milieu aqueux à des températures de 0 à 120°C, à une concentration totale de 10 à 60% et à des valeurs de pH supérieures à 6.

7. Utilisation des polyamines hydrosolubles suivant la revendication 1 comme adjuvants pour accroître la rétention de fibres, de charges et de pigments ainsi que comme accélérateurs d'élimination de l'eau dans la fabrication du papier et pour le traitement d'eaux résiduaires de machines à papier par filtration, sédimentation et flottation.

8. Adjuvants destinés à accroître la rétention de fibres, de charges et de pigments ainsi qu'accélérateurs d'élimination de l'eau dans la fabrication du papier et pour le traitement d'eaux résiduaires de machines à papier par filtration, sédimentation et flottation, contenant comme composant actif des polyamines hydrosolubles suivant la revendication 1.